# EUROPEAN PATENT APPLICATION

(11) **EP 0 886 165 A1**
(43) Date of publication of application: **23.12.1998**
(21) Application number: 98111190.9
(22) Date of filing: 19.06.1998
(51) Int. Cl.: G02C 5/22

(54) **Elastic hinge for spectacles**

(30) Priority: 19.06.1997 IT BL970010
(71) Applicant: Pellegrinotti, Ezio, Valle di Cadore, Belluno (IT); Pellegrinotti, Ugo, Valle di Cadore, Belluno (IT)
(72) Inventor: Pellegrinotti, Ezio, Valle di Cadore, Belluno (IT); Pellegrinotti, Ugo, Valle di Cadore, Belluno (IT)
(74) Representative: Beszédes, Stephan G., Dr.

(57) **Abstract**

The present invention refers to a particular form of elastic hinge for spectacles that allows to give a suitable snap action to the branch both during its opening and closing with respect to the front of the spectacles.

The main feature of the invention is that of involving the use of a ball (34) with a thrust elastic means (35) that is applied to the branch core (20) by means of a blocking sleeve (30) and of an axial containing box (10) that presents an axial passage (12) for said ball (34) as well as an eyelet (11) accomplished between the eyelets (3) and (4) of a front endpiece (5), said eyelets (3) and (4) being provided with seats (1) and (2) to house the ball (34) in the usual opening and closing positions of the branch core (20).

## Description

The present invention relates to a particular elastic hinge for spectacles able to give a suitable snap action to the branch with respect to the spectacle front both during the opening and the closing strokes of the branch.

The main feature of the invention is that of involving the use of a traditional ball, or any other spherical-end element suitably provided with an elastic thrust means and applied to the branch, it acting against the hinge loops assembled to the front endpieces or lugs, said hinge loops being provided with a couple of openings, indicatively orthogonal to each other, so as to house the ball that stops the branch both in the usual opening position and in the closing position onto the front of the spectacles.

Several constructive solutions of elastic hinges for spectacles are known, all having the double purpose of providing a defined pressure of the branches on the temples to allow the best positioning of the spectacles and that of favouring the opening and closing snap action of the branches onto the front of the spectacles. Said known hinges or branches elasticizing devices are usually made of a compression helical spring, or any other elastic means, acting in a sliding-block between the end of the branch and its hinge loop on the front endpiece, so that the branch can react to the strains applied on it during its usual opening or its largest spreading apart. The assembling of the elements constituting said elasticizing devices is usually set in a containing box that is applied to the internal side of the branch and that assures also the fastening of said elements to the branch itself.

The presence of this box containing the elasticizing devices is a great disadvantage as regards aesthetic and overall dimensions of the spectacles, particularly in the most modern models that are more adherent to the face.

Furthermore, the interposition of the elements or sliding inserts between the end of the branch and the hinge loops causes the sliding and so the deterioration of the elasticizing system, sometimes making unusable the whole branch.

Finally, the current elasticizing hinges for spectacle branches are all characterized by a complex of fixed and movable elements, which constitute the branches and are accomplished in the smallest sizes possible, lending them fragility and sensitiveness to bumps and strains with subsequent limited efficiency with the passing of time. Furthermore, some constructive solutions for elastic hinges for spectacles provide for their structure a single snap function, which is usually that for the closing, or they provide only one thrust reaction during the spreading apart stroke, without the closing action of the branch and besides they present the disadvantages caused by the presence of the containing box and by the constructive complexity.

Object of the present invention is that of accomplishing a hinge to elasticize the branches at the front of the spectacles so that the size of the box containing the device is reduced to the minimum and can be aligned with the end of the branch, creating a continuity with it and so reducing considerably the bulk as well as avoiding any aesthetic problem.

Another object of this invention is to provide the easiest hinge possible, it having a very small number of elements, which can be accomplished in more enduring and strong forms, and yet getting reduced overall dimensions.

A further object of the invention is to eliminate the moving pieces friction, providing the device with a ball that substitutes the sliding friction for a rolling friction.

These and other objects are completely fulfilled by the present device.

The subject matter of the present invention is an elastic hinge for spectacles, characterized by the fact that it is fundamentally constituted by a branch or branch core imprisoned in a sleeve that blocks an elastic element acting upon a ball located, together with the elastic means itself, in a hole of a box that is coaxial to the branch core itself, said box being provided with an eyelet between the eyelets and of the front endpiece, said eyelet 11 being fixed to said eyelets with the screw and said eyelets being provided with a couple of seats or housings that define the opening and closing position of the branch core, housing the ball that is pushed by the above-mentioned elastic means.

According to an advantageous embodiment of the invention the front endpiece is provided with traditional hinge prongs or eyelets, the eyelets themselves presenting a couple of seats or housings, indicatively orthogonal to each other, which cause the opening or closing position of the branch core, helping the snap effect in said opening and closing strokes as well as during the return from the maximum opening of the branch core.

Advantageously a hinge box presents an axial passage that meets the head eyelet to house a ball, whose exceeding part is placed into the seats of the prongs to determine the opening and closing position of the branch core, the rotation of the branch itself allowing the movement of the ball on the edge of the eyelets from a seat to the other seat to reverse its opening or closing position relatively to the front of the spectacles.

Preferably in the angular translation stroke near the entry of the seats, the thrust reaction of the elastic means helps the housing of the ball into said seats with a reaction snap against the greater compression of the ball.

It is also preferred that an elastic means exerts the expected compression upon the ball thanks to the fact that it is blocked by a co-axial sleeve that is fixed steadily to the box with, for example, a suitable pression between cone-shaped surfaces or with other traditional fixing systems.

Furthermore it is preferred that a sleeve houses a branch or branch core in its passage holding its end in the narrow seat, fixing steadily and co-axially the branch or core branch to the box by means of its hinge eyelet and by means of its hinge eyelets and of the front endpiece as well.

Moreover the maximum opening of the branch core is fixed through the stopping of an edging or relief of the eyelet that knocks against a match or against the bottom of the prongs.

According to an alternative embodiment of the invention the sleeve, the elastic means and the ball are replaced with a sleeve that presents an extension that ends with or supports a spherical part, the spherical part itself and the extension having an opening that houses the end of the branch core and that makes the spherical part suitably elastic during the rotation stroke for the passage of the spherical part itself from one seat to the other, for example from the seat to the seat or vice versa.

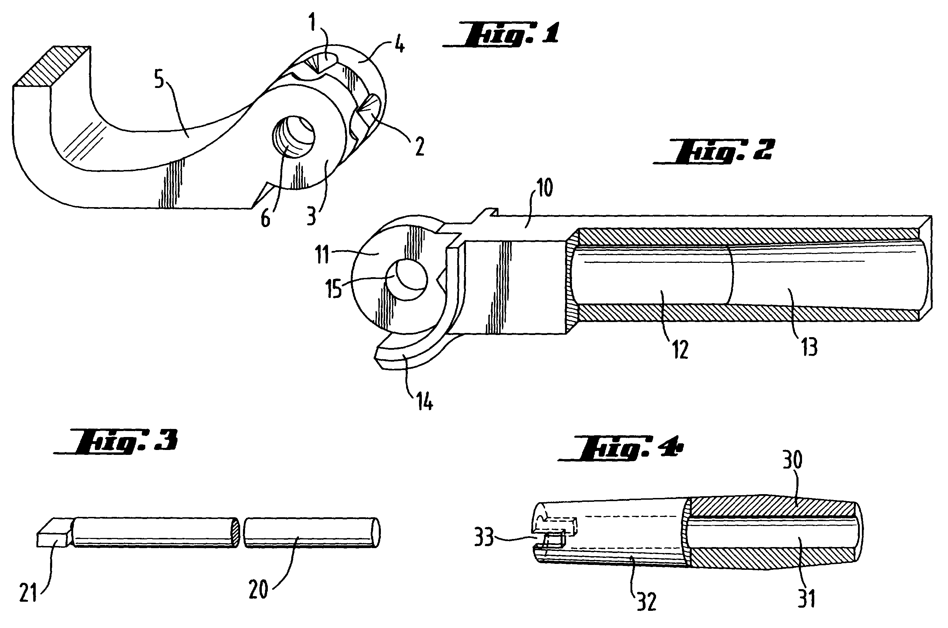

An illustrative exemplary embodiment according to the invention which is explained also with the aid of eleven schematic drawings in four enclosed sheets in which
- - Fig. 1: of table 1 shows a perspective view of a front endpiece or lug for spectacles, said lug being provided with two circle prongs for the branch hinge with a couple of openings or cone-shaped cavities accomplished on the hinge prongs themselves;
- - Fig. 2: shows a perspective view of the end branch box that presents a cavity to fix the front endpiece of fig. 1 to the prongs;
- - Fig. 3: shows a perspective view of the end of the branch core that is to be fixed onto the end box of fig. 2;

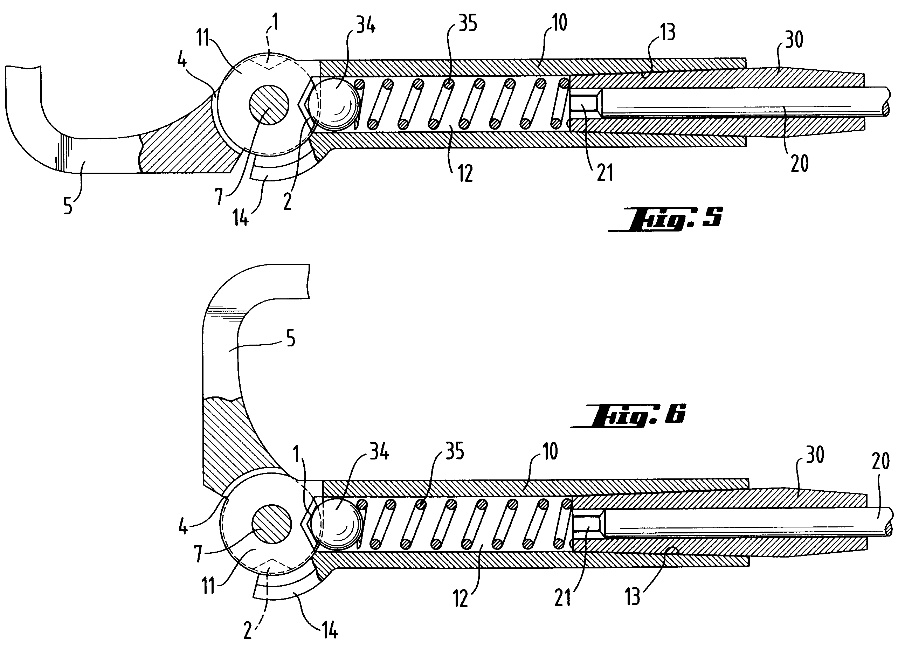

- - Fig. 4: shows a perspective view of the containing sleeve at the end of the branch shown in fig. 3, said sleeve being also a support for an elastic means that has to be placed into the box of fig. 2;
- - Fig. 5: shows an axial section view of the hinge elements reprented in figs. 1 to 4 assembled together with a ball and an elastic means to form the hinge at issue, it being illustrated in the usual opening position of the branch on the front endpiece;
- - Fig. 6: shows the same axial section of fig. 5, the same branch being represented in its closing position relatively to the front endpiece of the spectacles;
- - Fig. 7: of table 2 shows a partially sectioned vertical view of an alternative form of front endpiece according to a first constructive variation of the contrivance at issue;
- - Fig. 8: shows a partially sectioned vertical view of a box accomplished according to the constructive variation of the front endpiece of fig. 7;
- - Fig. 9: shows a further constructive variation of the present contrivance that enables the replacement both of the ball and of the elastic means used in the first constructive solution;
- - Fig. 10: shows an axial section of the assembling of the pieces represented in figs. 7, 8 and 9, it being illustrated with the branch in the usual opening position with respect to the spectacle front;
- - Fig. 11: shows a sectional view of the whole device, like that of fig. 10, it being represented with the branch in the closing position with respect to the spectacle front.

In all drawings the same elements are represented or are understood as being represented with the same reference number. The basic idea of this invention consists in accomplishing a couple of seats or housings 1 and 2 between the prongs or eyelets 3 and 4 of the front endpiece 5, which is usually applied to the end of the spectacle front to insert the branches, and which is provided with an usual passage 6 . According to the above-mentioned solution a box 10 with head eyelet 11 is accomplished, placed and fastened between the eyelets 3 and 4 of the front endpiece 5 , said box 10 being provided with an axial passage 12 that passes through the body 10 and that preferably presents the opposite end as tapered 13, besides of being provided with a match side 14 that defines the maximum opening possible of the branch core 20, as it is illustrated below. The eyelet 11 is provided with a passage 15 to allow the fitting of the eyelets 3 and 4 of the front endpiece 5 . A branch core 20 presents a hammer-shaped end 21 , preferably for pressing and working of its head.

A sleeve 30 has got a passage 31 that houses the branch core 20, its external surface 32 presenting a conical surface equal to the taper of the hole 13 of the box 10.

The contrivance at issue is completed with the ball 34 and with an elastic means 35 having equal diameter or slightly smaller diameter than that of the axial passage 12 of the box 10. Having described the elements of the invention, their assembling and their secure functioning is described below with reference to the figs. 5 and 6.

The branch core 20 to fix is housed in the passage 31 of the sleeve 30 , so that its hammer-shaped head 21 fits into the opening 33.

The eyelet 11 of the box 10 is accomodated between the eyelets 3 and 4 of the front endpiece 5 , so that its passage 15 is aligned with the passages 6 of the eyelets 3 and 4 , and it is hinged thereto by a screw 7 according to the traditional technique.

A ball 34 and a compression elastic means 35 are inserted into the seat 12 of the box 10, so that said ball 34, exceeding the body of the box 10 and yet being held by the eyelet 11, meets the surface of the eyelets or prongs 3 and 4 of the front endpiece 5.

The ball 34 and its compression elastic means 35 are pushed by the sleeve 30, whose cone-shaped side 32 is suitably pushed into the cone-shaped seat 13 of the box 10, in order to assure its stability. The sleeve 30 itself assures the suitable compression of the elastic means 35 and, at the same time, blocks the branch core 20 from hinging. The compression of the elastic means 35 pushes the ball 34 against the edge of the eyelets 3 and 4 of the front endpiece 5.

As a consequence of this pressure, rotating the branch core 20, the ball 34 places itself into the seat 1 or 2 of the eyelets 3 and 4, depending on the direction of the induced opening or closing movement.

The housing of the ball 34, for example into the seat 2, tends to keep the branch core 20 in the usual opening position with reference to the spectacle front, while the housing into the seat 1 defines its closing position.

The largest spreading apart of the branch core 20 is however defined by the shoulder 14 against the bottom of the front endpiece 5.

The pressure of the elastic means 35 on the ball 34 defines a snap action in the opening and closing stroke as well as in the return from an extra-opening of the branch, making the constructive solution till now described perfectly functioning and functional and besides removing the current lateral containing box as well as reducing considerably the bulk and giving a completely innovative aesthetic continuity to the branch, according to one of the specified purpose of the invention.

The constructive and assembling simplicity, besides the robustness of the pieces constituting it and the elimination of any sliding friction make the proposed constructive solution, relatively to the state of the art, new and advantageous, according to other mentioned purposes.

Obviously the constructive solution, illustrated also by means of the drawings of sheet 1, can be accomplished with other constructive solutions.

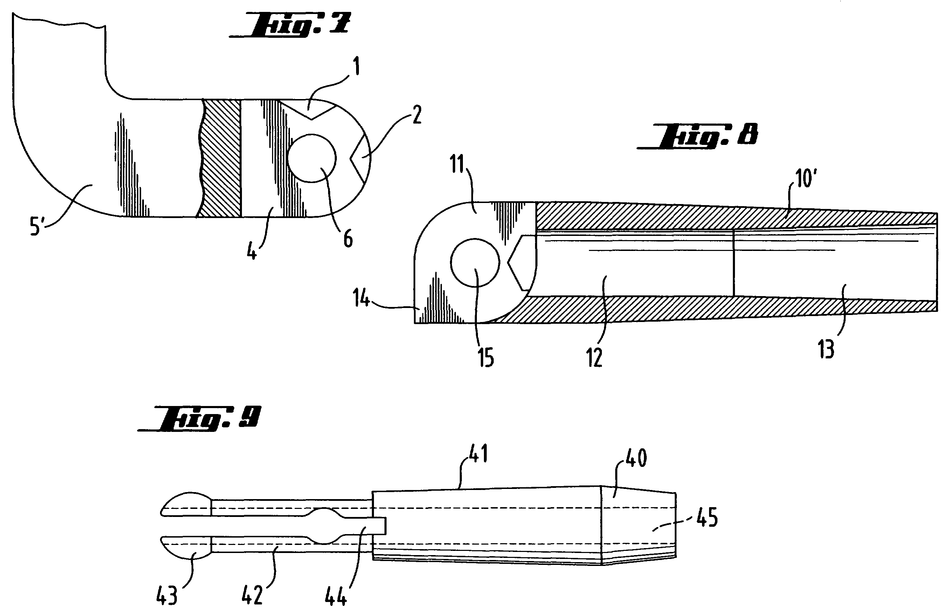

For example, a first constructive variation is shown in figs. 7 and 8 of sheet 2, where a second constructive form of the front endpiece 5' and of the box 10' is suggested. Said front endpiece 5' is still provided with a couple of eyelets 3 and 4 with openings 1 and 2 and with passage 6, while the eyelet 11 of the box 10' is provided with a shoulder 14 that acts as regulator of the maximum spreading apart of the branch core 20.

Besides the basic front endpiece 5 and the basic box 10, or besides the first variation of the front endpiece 5' and of the box 10', another constructive possibility can be added, removing the ball 34, the elastic means 35 and the sleeve 30 and replacing these pieces with a single element 40 that has a cone-shaped section end 41 similar to the cone-shape 32 of the sleeve 30 but that has also an extension 42 whose opposite end is a spherical part 43, said extension 42 having preferably an opening (notch) 44 and a passage 45 and being accomplished in harmonic steel (accaio armonico) to be adequately elastic. After having put the branch core 20 into the hole 45 of the element 40 , so that the head 21 of the branch core 20 is housed in the bottom of the opening 44 , the element 40 is applied to the cone-shaped seat of the box 10 or 10' to be strongly held.

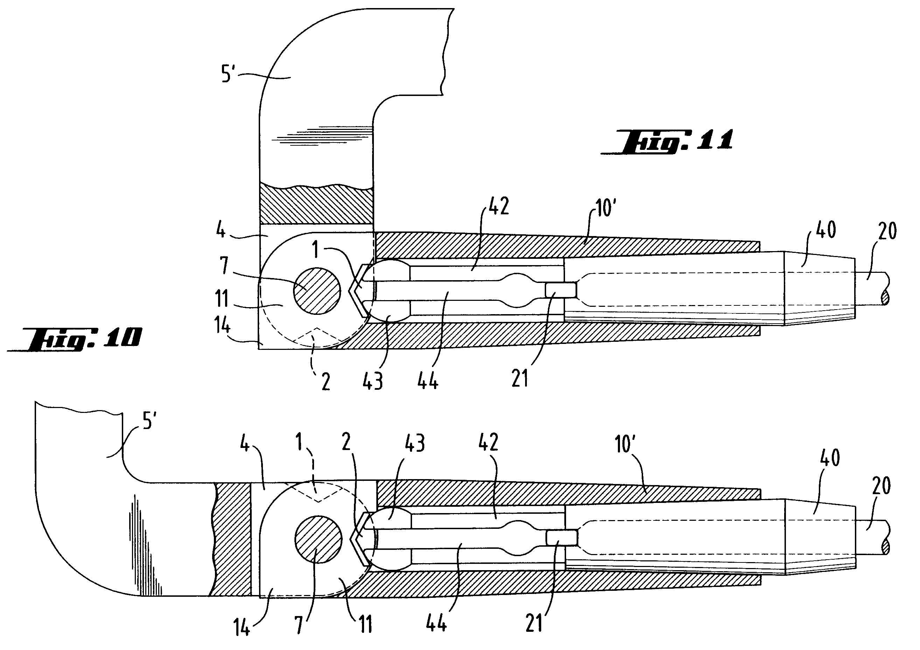

The eyelet 11 of box 10 or 10' is then placed between the eyelets 3 and 4 of the front endpiece 5 or 5' to hinge the two pieces in conformity, for example, with the solution of fig. 10.

In this solution the spherical part 43 is placed in the seat 2 of the prongs 3 and 4 , lending stability to the opening position of the branch core 20. Pressing the branch core 20 outwards the maximum spreading apart defined by the shoulder 14 at the bottom of the front endpiece 5' can be reached, while the spherical part 43 tends to push the branch core 20 back to the usual position of fig. 10, causing an expected templar pression. Pressing the same branch core 20 towards the opposite direction, the spherical part 43 comes gradually out from the seat 2 , bending enough to slide on the edge of the eyelets 3 and 4 to the seat 1 . At this point the spherical part 43 causes the snap action of the branch core 20, which is led to its rest position as shown in fig. 11.

Likewise a snap action is achieved also by passing from the rest position to the usual opening position of the branch core 20.

## Claims

1. Elastic hinge for spectacles, characterized by the fact that it is fundamentally constituted by a branch or branch core (20) imprisoned in a sleeve (30) that blocks an elastic element (35) acting upon a ball (34) located, together with the elastic means (35) itself, in an axial passage (12) of a box (10) that is co-axial to the branch core (20) itself, said box (10) being provided with an eyelet (11) between the eyelets (3) and (4) of the front endpiece (5), said eyelet (11) being fixed to said eyelets (3) and (4) with the screw (7) and said eyelets (3) and (4) being provided with a couple of seats (1) and (2) that define the opening and closing position of the branch core (20), housing the ball (34) that is pushed by the above-mentioned elastic means (35).

2. Elastic hinge for spectacles according to claim 1, characterized in that the front endpiece (5) is provided with traditional hinge prongs or eyelets (3) and (4), the eyelets (3) and (4) themselves presenting a couple of seats or housings (1) and (2), indicatively orthogonal to each other, which cause the opening or closing position of the branch core (20), helping the snap effect in said opening and closing strokes as well as during the return from the maximum opening of the branch core (20).

3. Elastic hinge for spectacles according to claim 1 or 2, characterized in that a hinge box (10) presents an axial passage (12) that meets the head eyelet (11) to house a ball (34), whose exceeding part is placed into the seats (1) and (2) of the prongs (3) and (4) to determine the opening and closing position of the branch core (20), the rotation of the branch itself allowing the movement of the ball (34) on the edge of the eyelets (3) and (4) from a seat (1) or (2) to the other seat (2) or (1) to reverse its opening or closing position relatively to the front of the spectacles.

4. Elastic hinge for spectacles according to claim 3, characterized by the fact that in the angular translation stroke near the entry of the seats (1) or (2), the thrust reaction of the elastic means (35) helps the housing of the ball into said seats with a reaction snap against the greater compression of the ball (34).

5. Elastic hinge for spectacles according to claims 1 to 4, characterized by the fact that an elastic means (35) exerts the expected compression upon the ball (34) thanks to the fact that it is blocked by a co-axial sleeve (30) that is fixed steadily to the box (10) with, for example, a suitable pression between cone-shaped surfaces or with other traditional fixing systems.

6. Elastic hinge for spectacles according to claim 5, characterized by the fact that a sleeve (30) houses a branch or branch core (20) in its passage (31) holding its end (21) in the narrow seat (33), fixing steadily and co-axially the branch or branch core (20) to the box (10) by means of its hinge eyelet (11) and by means of its hinge eyelets (3) and (4) of the front endpiece (5) as well.

7. Elastic hinge for spectacles according to claims 1 to 6, characterized by the fact that the maximum opening of the branch core (20) is fixed through the stopping of a match side [edging or relief] (14) of the eyelet (11) that knocks against a match or against the bottom of the prongs (3) and (4).

8. Elastic hinge for spectacles according to claim 1, characterized by the fact that in an alternative solution the sleeve (30), the elastic means (35) and the ball (34) are replaced with a sleeve (40) that presents an extension (42) that ends with or supports a spherical part (43), the spherical part itself and the extension (42) having an opening (44) that houses the end (21) of the branch core (20) and that makes the spherical part (43) suitably elastic during the rotation stroke for the passage of the spherical part (43) itself from one seat to the other, for example from the seat (1) to the seat (2) or vice versa.
